# EUROPEAN PATENT APPLICATION

(11) **EP 4 836 219 A1**
(43) Date of publication of application: **04.11.2026**
(21) Application number: 26173958.5
(22) Date of filing: 22.04.2026
(51) Int. Cl.: H02J 1/102, H02J 1/10, H02J 1/15

(54) **DIRECT CURRENT MICROGRID AND POWER CONTROL METHOD THEREOF**

(30) Priority: 30.04.2025 CN 202510569872
(71) Applicant: SCHNEIDER ELECTRIC INDUSTRIES SAS, 92500 Rueil-Malmaison (FR)
(72) Inventor: LI, Ganlin, Shanghai 201203 (CN); FAN, Jianguo, Shanghai 201203 (CN); YANG, Yong, Shanghai 201203 (CN); YUAN, Xu, Shanghai 201203 (CN); CHEN, Jiamin, Shanghai 201203 (CN); YAN, Jianhai, Shanghai 201203 (CN)
(74) Representative: Openshaw & Co.

(57) **Abstract**

A DC microgrid includes: a DC bus and a plurality of devices connected to the DC bus. At least one of the plurality of devices is configured to: detect a voltage on the DC bus and a power of the device; maintain the power of the device at a specific power based on the voltage on the DC bus being within a constant power voltage interval; and adjust the power and the voltage of the device based on the voltage on the DC bus being within a droop voltage interval, wherein the specific power is non-zero.

## Description

### TECHNICAL FIELD

The present disclosure relates to a Direct Current (DC) microgrid and a power control method thereof, and more specifically, relates to a DC microgrid based on a constant power droop and a power control method thereof.

### BACKGROUND

As an efficient and flexible distributed energy system, Direct Current (DC) microgrids have wide applications in the integration of renewable energy, energy storage management, and load power supply. In DC microgrid control strategies, a master-slave control is one of the common operating modes. However, a traditional master-slave control cannot automatically adjust power distribution when the system power is insufficient. Specifically, when a total system power cannot meet load demands, a master control unit lacks an effective adaptive adjustment mechanism. This results in power-consuming devices (such as high-capacity loads or energy storage devices) being unable to obtain a continuous voltage reference, thereby affecting the power supply quality and stability of the system. Furthermore, traditional DC microgrids suffer from limitations due to their reliance on droop control. Specifically, a traditional droop control achieves a power distribution by adjusting a voltage-current characteristic; however, when the power is insufficient, relying solely on adjustments to the droop coefficient makes it difficult to achieve dynamic voltage compensations. Existing methods that perform secondary voltage compensation by shifting a droop curve or adjusting the droop coefficient also suffer from the drawback of complex control algorithms.

To this end, the present disclosure proposes a DC microgrid and a power control method thereof. By employing a constant power droop, the system could self-regulate when the DC microgrid experiences a power surplus or a power deficit, thereby enhancing the system's dynamic stability and ease of adjustment.

### SUMMARY

According to one aspect of an embodiment of the present invention, a Direct Current (DC) microgrid is provided, comprising: a DC bus; and a plurality of devices connected to the DC bus, wherein at least one of the plurality of devices is configured to: detect a voltage on the DC bus and a power of the device; maintain the power of the device at a specific power based on the voltage on the DC bus being within a constant power voltage interval; and adjust the power and a voltage of the device based on the voltage on the DC bus being within a droop voltage interval, wherein the specific power is non-zero.

In another aspect of the present disclosure, a power control method for a Direct Current (DC) microgrid is provided, wherein the DC microgrid includes a DC bus and a plurality of devices connected to the DC bus, for at least one of the plurality of devices, the method comprises: detecting a voltage on the DC bus and a power of the device; maintaining the power of the device at a specific power based on the voltage on the DC bus being within a constant power voltage interval; and adjusting the power and a voltage of the device based on the voltage on the DC bus being within a droop voltage interval, wherein the specific power is non-zero.

In another aspect of the present disclosure, a computer-readable storage medium having computer-executable instructions stored thereon is provided, when executed by a processing unit, the instructions are configured to implement the aforementioned method.

Other aspects, advantages, and salient features of the present disclosure will become clear to those skilled in the art from the following detailed description in conjunction with the accompanying drawings which disclose various embodiments of the present disclosure.

### BRIEF DESCRIPTION OF THE DRAWINGS

The present invention will be more readily understood by the following detailed description with the aid of the accompanying drawings, wherein the same symbols designate units of the same construction and in which:
FIG. 1 illustrates a schematic diagram of a DC microgrid according to embodiments of the present disclosure;
FIG. 2A to FIG. 2C illustrate power-voltage curves of various devices in a DC microgrid in which constant power droop is applied to an energy storage device, according to embodiments of the present disclosure;
FIG. 3A to FIG. 3C illustrate power-voltage curves for various devices in a DC microgrid in which constant power droop is applied to an energy storage device and a charging station according to embodiments of the present disclosure;
FIG. 4 illustrates power-voltage curves for various devices in a DC microgrid in which constant power droop is applied to an Active Front-End (AFE) device according to embodiments of the present disclosure;
FIG. 5 illustrates a schematic diagram of a constant power droop implemented by an energy storage device according to embodiments of the present disclosure; and
FIG. 6 illustrates a power control method for a DC microgrid according to embodiments of the present disclosure.

Throughout the accompanying drawings, similar reference numerals will be understood to refer to similar parts, components, and structures.

### DETAILED DESCRIPTION

The technical solutions in the embodiments of the present invention will be described clearly and completely in the following in conjunction with the accompanying drawings in the embodiments of the present invention, and it is obvious that the described embodiments are a part of the embodiments of the present invention instead of all of the embodiments. Based on the embodiments in the present invention, all other embodiments obtained by a person of ordinary skill in the art without making creative labor fall within the scope of protection of the present invention.

In addition, one of ordinary skill in the art will understand that the elements in the accompanying drawings are illustrated for simplicity and may not necessarily be drawn to scale. For example, the dimensions of some elements in the accompanying drawings may be enlarged relative to other elements to help improve understanding of aspects of the embodiments. In addition, one or more elements may have been represented by various symbols in the accompanying drawings, and the accompanying drawings may show only those particular details that are relevant to an understanding of the embodiments of the present disclosure so that the accompanying drawings do not have to be obscured by details that would be obvious to a person of ordinary skill in the art who would benefit from the descriptions herein.

In addition, it should be noted that in this specification, A connected to B may mean "A is directly connected to B" or "A is connected to B via other intermediate". A connected between B and C may mean "A is directly connected to B and C" or "A is connected to B and C via other middleware". In addition, it should be noted that in this specification, "first" and "second" are used only to distinguish one element from another element, and are not used to rank or limit the importance or priority of different elements.

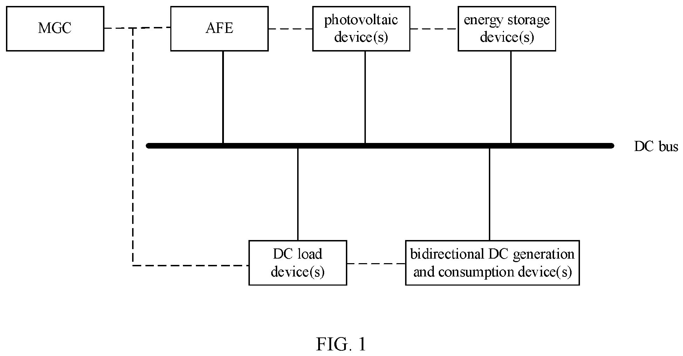

FIG. 1 illustrates a schematic diagram of a DC microgrid according to embodiments of the present disclosure.

As shown in FIG. 1, the DC microgrid may include a DC bus, an energy storage device(s) (BESSs), a photovoltaic (PV) device(s), an Active Front-End (AFE) device(s), a DC load device(s), a bidirectional DC generation and consumption device(s), and a microgrid controller (MGC). However, it should be understood that the present disclosure is not limited to this, and the DC microgrid may include more or fewer devices than shown in FIG. 1.

The energy storage device, the photovoltaic device, the AFE device, the DC load device, and the bidirectional DC generation and consumption device may be connected to the DC bus, and power may be transferred via the DC bus. The microgrid controller may control the operations of each device in the DC microgrid and configure each device.

In some examples, the photovoltaic device may be connected to the DC bus via a DC-DC converter, and the energy storage device may also be connected to the DC bus via a DC-DC converter. The DC load device may be connected to the DC bus via a DC/DC converter and a pre-charging circuit, and the bidirectional DC generation-consumption device may also be connected to the DC bus via a DC/DC converter and a pre-charging circuit. In some embodiments, the DC load devices may include devices such as a lighting device and an air conditioner. Furthermore, the DC microgrid may be connected to a utility grid via the AFE device.

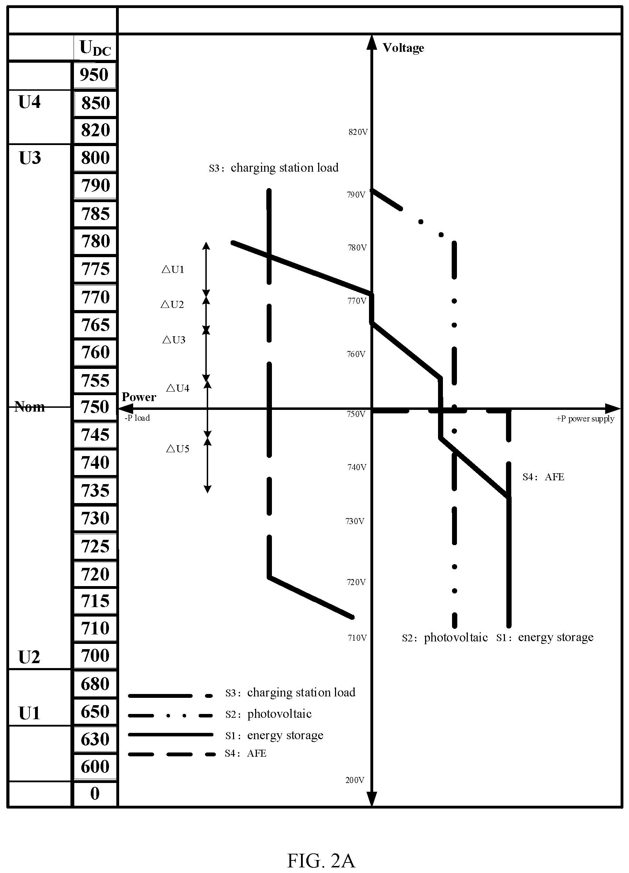

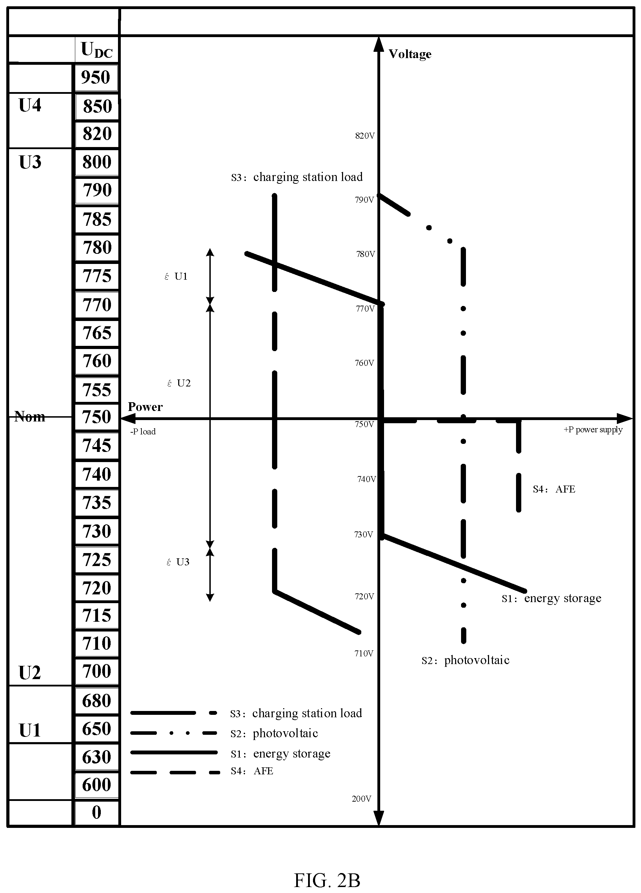

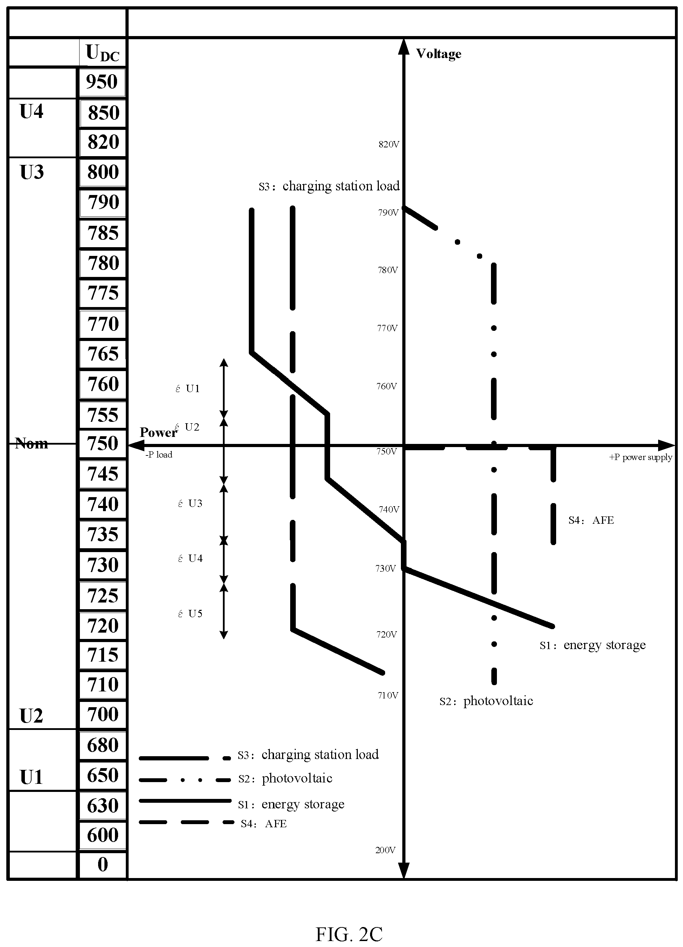

FIG. 2A to FIG. 2C illustrate power-voltage curves for various devices in the DC microgrid in which a constant power droop is applied to the energy storage device according to embodiments of the present disclosure. Specifically, FIG. 2A describes the power-voltage curves of various devices in the DC microgrid during energy storage charging, FIG. 2B describes the power-voltage curves of various devices in the DC microgrid during energy storage standby, and FIG. 2C describes the power-voltage curves of various devices in the DC microgrid during energy storage charging.

As shown in FIG. 2A to FIG. 2C, the horizontal axis represents the powers of respective devices in the DC microgrid, and the vertical axis represents the voltage of the DC bus. Different curves correspond to different devices, and each device could adjust its own power and voltage based on its curve when the DC microgrid experiences a power surplus (the voltage on the DC bus decreases) or a power deficit (the voltage on the DC bus increases).

Referring to FIG. 2A, the energy storage device may have a power-voltage curve S1, the photovoltaic device may have a power-voltage curve S2, the charging station load may have a power-voltage curve S3, and the AFE device may have a power-voltage curve S4. As shown in FIG. 2A, only the energy storage device is configured with the constant power droop. However, the present disclosure is not limited to this, and any power-adjustable device in the DC microgrid may be configured with the constant power droop.

In some embodiments, the energy storage device may be preconfigured with a constant power voltage interval and a droop voltage interval. The power of the energy storage device may be maintained at a specific power when the voltage on the DC bus is within the constant power voltage interval, and the power and the voltage of the energy storage device may be adjusted based on the power-voltage curve when the voltage on the DC bus is within the droop voltage interval. In some embodiments, the specific power may be configured by the microgrid controller, and the specific power may be non-zero. Furthermore, the specific power should be between a maximum charging power and a maximum discharging power of the energy storage device.

As shown in FIG. 2A, the energy storage device may have constant power voltage intervals ΔU2 and ΔU4, as well as droop voltage intervals ΔU1, ΔU3, and ΔU5. It may be understood that, depending on the configured constant power voltage intervals, the droop voltage intervals, and the magnitude of the specific power, the energy storage device may follow power-voltage curves with different slopes within the droop voltage intervals to adjust its own power and voltage.

In some embodiments, consider a steady-state where the current voltage on the DC bus is 750 V. When the power is insufficient in the DC microgrid and the voltage on the DC bus drops, if the energy storage device determines that the voltage on the DC bus is still within its constant power voltage interval ΔU4, the energy storage device maintains its own power, and the AFE device increases its power first. If the power in the DC microgrid remains insufficient and the voltage on the DC bus drops further, the energy storage device may determine that the voltage on the DC bus is now within its voltage droop interval ΔU5, and the energy storage device may increase its own discharging power. If the power in the DC microgrid remains insufficient and the voltage on the DC bus continues to drop, but the power of the energy storage device has reached its discharging power upper limit, the charging power of the charging station may be limited.

In some embodiments, still consider a steady-state where the current voltage on the DC bus is 750 V. When the power in the DC microgrid is in excess and the voltage on the DC bus increases, if the energy storage device determines that the voltage on the DC bus is still within its constant power voltage interval ΔU4, the energy storage device maintains its own power, and the AFE device reduces its own power first. If the power in the DC microgrid remains in excess and the voltage on the DC bus continues to increase, the energy storage device may determine that the voltage on the DC bus is now within its droop voltage interval ΔU3, and the energy storage device may reduce its own discharging power. If the power in the DC microgrid still remains in excess and the voltage on the DC bus continues to increase, the energy storage device may determine that the voltage on the DC bus is now within its droop voltage interval ΔU1, and the energy storage device may begin to be charged. If the power in the DC microgrid further remains in excess and the voltage on the DC bus further continues to increase, the power of the photovoltaic device may be limited.

Referring to FIG. 2B, similar to FIG. 2A, the energy storage device may have a power-voltage curve S1, the photovoltaic device may have a power-voltage curve S2, the charging station load may have a power-voltage curve S3, and the AFE device may have a power-voltage curve S4. However, unlike FIG. 2A, only the energy storage device is configured with a constant power droop at a specific power of zero, that is to say, it could be fitted as a droop.

In some embodiments, consider a steady-state where the current voltage on the DC bus is 750 V. When the power is insufficient in the DC microgrid and the voltage on the DC bus drops, if the energy storage device determines that the voltage on the DC bus remains within its constant power voltage interval ΔU2, the energy storage device maintains its power, that is, it remains in a standby status, and the AFE device increases its power first. If the power in the DC microgrid remains insufficient and the voltage on the DC bus drops further, the energy storage device may determine that the voltage on the DC bus is now within its droop voltage interval ΔU3, and then the energy storage device begins to be discharged. If the power in the DC microgrid remains insufficient and the voltage on the DC bus continues to drop, but the power of the energy storage device has reached its discharging power upper limit, the charging power of the charging station may be limited.

In some embodiments, still consider a steady-state where the current voltage on the DC bus is 750 V. When the power in the DC microgrid is in excess and the voltage on the DC bus increases, if the energy storage device determines that the voltage on the DC bus is still within its constant power voltage interval ΔU2, the energy storage device maintains its own power, that is, it remains in the standby status, and the AFE device reduces its own power first. If the power in the DC microgrid remains in excess and the voltage on the DC bus continues to increase, the energy storage device may determine that the voltage on the DC bus is now within its voltage droop interval ΔU1, and the energy storage device may begin to be charged. If the power in the DC microgrid remains in excess and the voltage on the DC bus continues to increase, the power of the Photovoltaic device may be limited.

Referring to FIG. 2C, similar to FIG. 2A, the energy storage device may have a power-voltage curve S1, the PV equipment may have a power-voltage curve S2, the EV charging station load may have a power-voltage curve S3, and the AFE device may have a power-voltage curve S4. However, unlike FIG. 2A, the energy storage device is configured to maintain a specific power being less than zero within the constant power voltage interval.

In some embodiments, consider a steady-state where the current voltage on the DC bus is 750 V. When the power in the DC microgrid is insufficient and the voltage on the DC bus drops, if the energy storage device determines that the voltage on the DC bus is still within its constant power voltage interval ΔU2, the energy storage device maintains its own power, and the AFE device increases its power first. If the power in the DC microgrid remains insufficient and the voltage on the DC bus drops further, the energy storage device may find that the voltage on the DC bus is now within its droop voltage interval ΔU3, and the energy storage device may reduce its charging power. If power in the DC microgrid remains insufficient and the voltage on the DC bus continues to drop, the energy storage device begins to discharge. If the power in the DC microgrid remains insufficient and the voltage on the DC bus continues to drop, the charging power of the charging station may be limited.

In some embodiments, still consider a steady-state where the current voltage on the DC bus is 750 V. When the power in the DC microgrid is in excess and the voltage on the DC bus increases, if the energy storage device determines that the voltage on the DC bus is still within its constant power voltage interval ΔU2, the energy storage device maintains its own power, and the AFE device reduces its own power first. If the power in the DC microgrid remains in excess and the voltage on the DC bus increases further, the energy storage device may determine that the voltage on the DC bus is within its droop voltage interval ΔU1, and then the energy storage device may increase its own charging power. If the power in the DC microgrid still remains in excess and the voltage on the DC bus continues to increase, but the energy storage device has already reached its charging power upper limit, the power of the photovoltaic device may be limited.

By applying the power-voltage curves shown in FIG. 2A to FIG. 2C to the energy storage devices in the DC microgrid, a peak shaving and a valley filling could be achieved in the DC microgrid, thereby optimizing the economic efficiency of the DC microgrid.

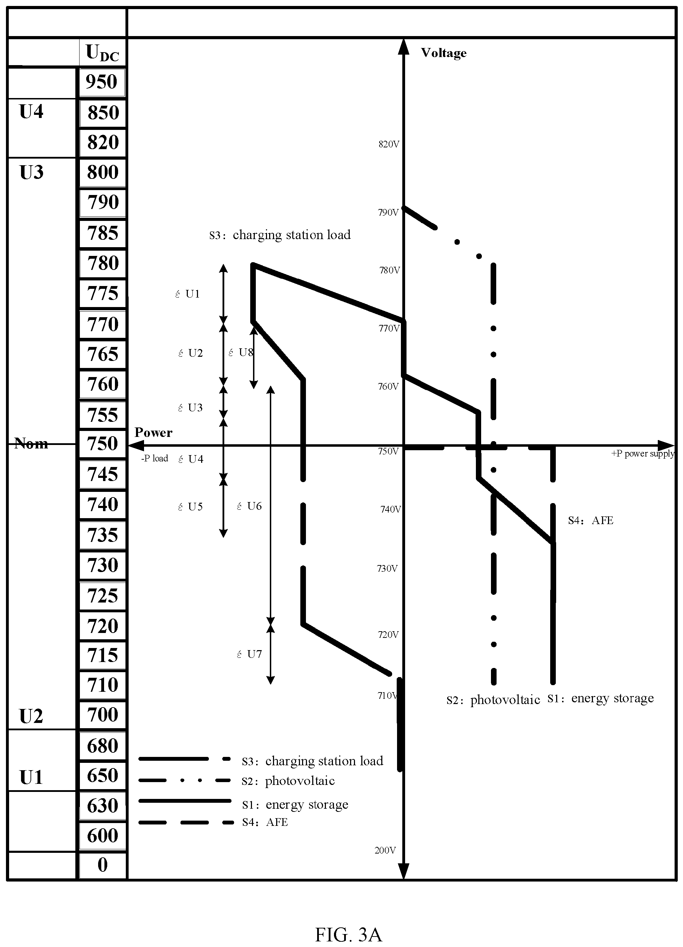

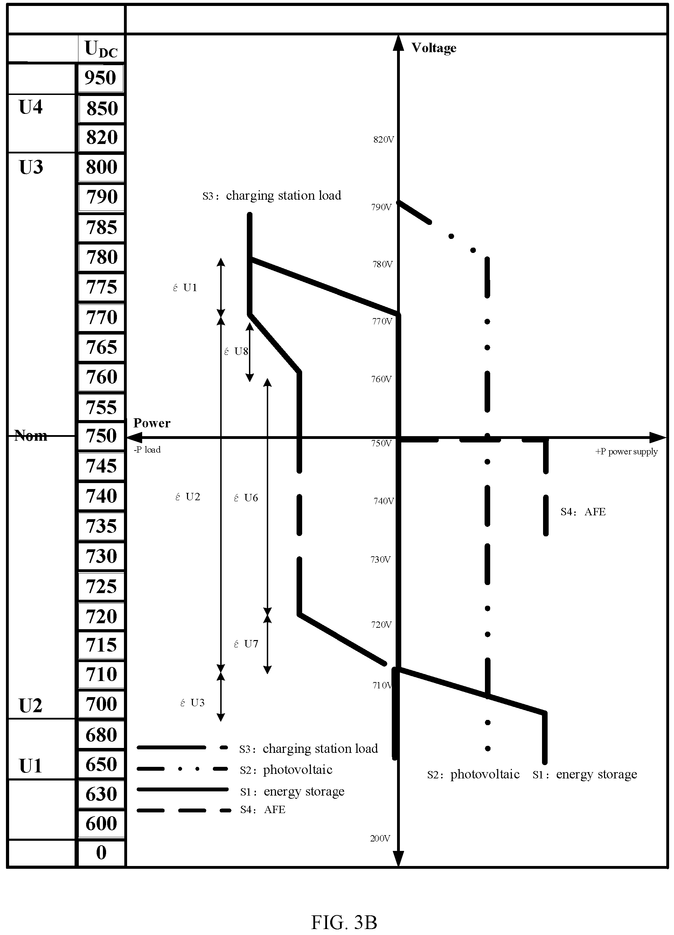

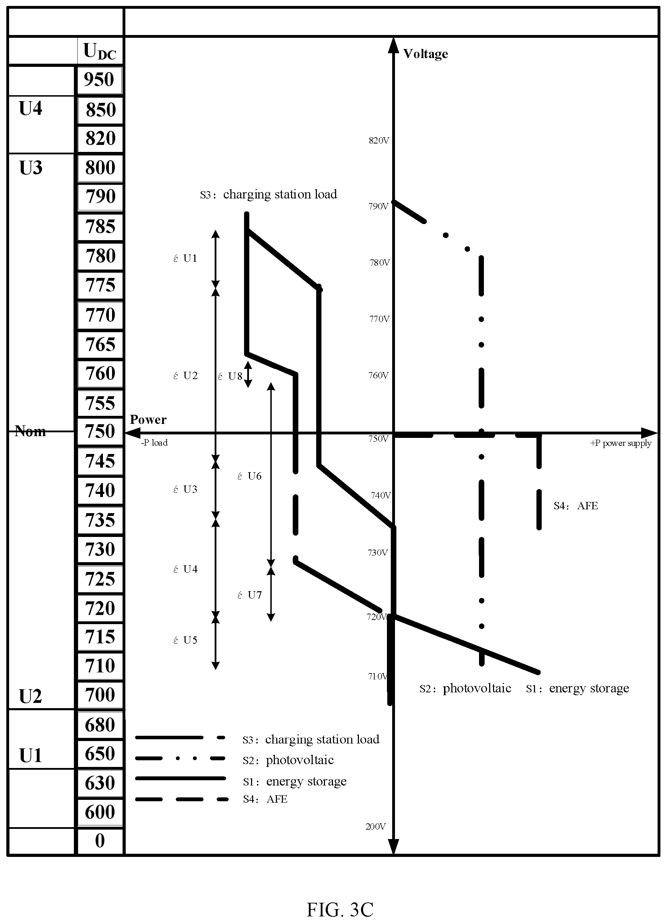

FIG. 3A to FIG. 3C illustrate the power-voltage curves for various devices in the DC microgrid in which a constant power droop is applied to the energy storage device and the charging station, according to embodiments of the present disclosure. Specifically, FIG. 3A describes the power-voltage curves for various devices in the DC microgrid during energy storage charging; FIG. 3B describes the power-voltage curves for various devices in the DC microgrid during energy storage standby; and FIG. 3C describes the power-voltage curves for various devices in the DC microgrid during energy storage charging.

As shown in FIG. 3A to FIG. 3C, the horizontal axis represents the power of respective devices in the DC microgrid, and the vertical axis represents the voltage on the DC bus. Different curves correspond to different devices, and each device could adjust its own power and voltage based on its curve when the DC microgrid experiences a power surplus (the voltage on the DC bus decreases ) or a power deficit (the voltage on the DC bus increases).

Referring to FIG. 3A, the energy storage device may have a power-voltage curve S1, the photovoltaic device may have a power-voltage curve S2, the charging station load may have a power-voltage curve S3, and the AFE device may have a power-voltage curve S4. As can be seen from FIG. 3A, both the energy storage device and the charging station load are configured with the constant power droop. However, the present disclosure is not limited to this, and any power-adjustable device in the DC microgrid may be configured with the constant power droop.

In some embodiments, the energy storage device and the charging station load may be preconfigured with their respective constant power voltage intervals and the droop voltage intervals. The power of the energy storage device may be maintained at a specific power when the voltage on the DC bus is within the constant power voltage interval of the energy storage device, and the power and voltage of the energy storage device may be adjusted based on the power-voltage curve when the voltage on the DC bus is within the droop voltage interval of the energy storage device. Similarly, the power of the charging station load may be maintained at another specific power when the voltage on the DC bus is within the constant power voltage interval of the charging station load, and the power and voltage of the charging station load may be adjusted based on the power-voltage curve when the voltage on the DC bus is within the droop voltage interval of the charging station load. In some embodiments, the specific power may be configured by the microgrid controller, and the specific power is non-zero. Furthermore, the specific power should be between a maximum charging power and a maximum discharging power of the energy storage device.

As shown in FIG. 3A, the energy storage device may have the constant power voltage intervals ΔU2 and ΔU4, as well as the droop voltage intervals ΔU1, ΔU3, and ΔU5, and the charging station load may have a constant power voltage interval ΔU6 and droop voltage intervals ΔU8 and ΔU7..It may be understood that, depending on the configured constant power voltage intervals, the droop voltage intervals, and the magnitude of the specific power, the energy storage device and the charging station load may follow power-voltage curves with different slopes within the droop voltage intervals to adjust their own powers and voltages.

In some embodiments, consider a steady-state where the current voltage on the DC bus is 750 V. When the power in the DC microgrid is insufficient and the voltage on the DC bus drops, if the energy storage device determines that the voltage on the DC bus is still within its constant power voltage interval ΔU4 and the charging station load determines that the voltage on the DC bus is still within its constant power voltage interval ΔU6, then the energy storage device and the charging station load maintain their own power powers, and the AFE device increases its own power first. If the power in the DC microgrid remains insufficient and the voltage on the DC bus drops further, the energy storage device may determine that the voltage on the DC bus is now within its droop voltage interval ΔU5, and the charging station load may determine that the voltage on the DC bus is still within its constant power voltage interval ΔU6. In this case, the energy storage device increases its discharging power, and the charging station load maintains its power. If the power in the DC microgrid remains insufficient and the voltage on the DC bus continues to drop, but the power of the energy storage device has reached its discharging power upper limit, and the charging station load determines that the voltage on the DC bus is within its voltage droop interval ΔU7, then the charging power of the charging station load may be reduced.

In some embodiments, still consider a steady-state where the current voltage on the DC bus is 750 V. When the power in the DC microgrid is in excess and the voltage on the DC bus increases, if the energy storage device determines that the voltage on the DC bus is still within its constant power voltage interval ΔU4 and the charging station load determines that the voltage on the DC bus is still within its constant power voltage interval ΔU6, then the energy storage device and the charging station load maintain their own powers, and the AFE device reduces its own power first. If the power in the DC microgrid remains in excess and the voltage on the DC bus continues to increase, the energy storage device may determine that the voltage on the DC bus is now within its droop voltage interval ΔU3, and the charging station load may determine that the voltage on the DC bus remains within its constant power voltage interval ΔU6. In this case, the energy storage device may reduce its own discharging power, while the charging station load maintains its power. If the power in the DC microgrid remains in excess and the voltage on the DC bus continues to increase, the energy storage device may determine that the voltage on the DC bus is now within its voltage droop interval ΔU1, and the energy storage device may begin to be charged. If the power in the DC microgrid further remains in excess and the voltage on the DC bus further continues to increase, and the charging station load may determine that the voltage on the DC bus is now within its droop voltage interval ΔU8, the charging power of the charging station load may increase. If the power in the DC microgrid remains in excess and the voltage on the DC bus continues to increase, the power of the photovoltaic device may be limited.

Referring to FIG. 3B, similar to FIG. 3A, the energy storage device may have a power-voltage curve S1, the photovoltaic device may have a power-voltage curve S2, the charging station load may have a power-voltage curve S3, and the AFE device may have a power-voltage curve S4. However, unlike FIG. 3A, the energy storage device is configured with a constant power droop at a specific power of zero, that is to say, it could be fitted as a droop, while the charging station load is still configured with a constant power droop at a specific power of non-zero.

In some embodiments, consider a steady-state where the current voltage on the DC bus is 750 V. When the power in the DC microgrid is insufficient and the voltage on the DC bus drops, if the energy storage device determines that the voltage on the DC bus is still within its constant power voltage interval ΔU2 and the charging station load determines that the voltage on the DC bus is still within its constant power voltage interval ΔU6, the energy storage device maintains its own power, that is, it remains in standby status, and the charging station load maintains its charging power, and the AFE device increases its own power first. If the power in the DC microgrid remains insufficient and the voltage on the DC bus drops further, the energy storage device may determine that the voltage on the DC bus is still within its constant power voltage interval ΔU2, while the charging station load may determine that the voltage on the DC bus is within its droop voltage interval ΔU7. In this case, the energy storage device remains in standby status, and the charging station load begins to reduce its charging power. If the power in the DC microgrid remains insufficient and the voltage on the DC bus continues to drop, the energy storage device may determine that the voltage on the DC bus is now within its droop voltage interval ΔU3, and the energy storage device may begin to discharge.

In some embodiments, still consider a steady-state where the current voltage on the DC bus is 750 V. When the power in the DC microgrid is excess and the voltage on the DC bus increases, if the energy storage device determines that the voltage on the DC bus is still within its constant power voltage interval ΔU2 and the charging station load determines that the voltage on the DC bus is still within its constant power voltage interval ΔU6, the energy storage device maintains its power, that is, it remains in standby status, and the charging station load maintains its charging power, and the AFE device reduces its power output first. If the power in the DC microgrid remains in excess and the voltage on the DC bus increases further, the energy storage device may determine that the voltage on the DC bus is still within its constant power voltage interval ΔU2, and the charging station load may determine that the voltage on the DC bus is within its droop voltage interval ΔU8. In this case, the energy storage device remains in standby status while the charging station load begins to increase its charging power. If the power in the DC microgrid remains in excess and the voltage on the DC bus continues to increase, the energy storage device may determine that the voltage on the DC bus is within its droop voltage interval ΔU1, and the energy storage device may begin to be charged. If the power in the DC microgrid remains in excess and the voltage on the DC bus continues to increase, the power of the photovoltaic device may be limited.

Referring to FIG. 3C, similar to FIG. 3A, the energy storage device may have a power-voltage curve S1, the photovoltaic device may have a power-voltage curve S2, the charging station load may have a power-voltage curve S3, and the AFE device may have a power-voltage curve S4. However, unlike FIG. 3A, the energy storage device is configured to maintain a specific power being less than zero within the constant power voltage interval.

In some embodiments, consider a steady-state where the current voltage on the DC bus is 750 V. When the power in the DC microgrid is insufficient and the voltage on the DC bus drops, if the energy storage device determines that the voltage on the DC bus is still within its constant power voltage interval ΔU2 and the charging station load determines that the voltage on the DC bus is still within its constant power voltage interval ΔU6, the energy storage device maintains its own power, the charging station load maintains its charging power, and the AFE device increases its own power first. If the power in the DC microgrid remains insufficient and the voltage on the DC bus drops further, the energy storage device may determine that the voltage on the DC bus is now within its droop voltage interval ΔU3, while the charging station load may determine that the voltage on the DC bus is still within its constant power voltage interval ΔU6. In this case, the energy storage device reduces its charging power, and the charging station load maintains its charging power. If the power in the DC microgrid remains insufficient and the voltage on the DC bus continues to drop, the charging station load may determine that the voltage on the DC bus is now within its voltage droop interval ΔU7, and then the charging station load begins to reduce its charging power. If the power in the DC microgrid remains insufficient and the voltage on the DC bus drops further, the energy storage device begins to discharge.

In some embodiments, still consider a steady-state where the current voltage on the DC bus is 750 V. When the power in the DC microgrid is in excess and the voltage on the DC bus increases, if the energy storage device determines that the voltage on the DC bus is still within its constant power voltage interval ΔU2 and the charging station load determines that the voltage on the DC bus is still within its constant power voltage interval ΔU6, the energy storage device maintains its power, the charging station load maintains its charging power, and the AFE device reduces its power first. If the power in the DC microgrid remains in excess and the voltage on the DC bus increases further, the energy storage device may determine that the voltage on the DC bus is still within its constant power voltage interval ΔU2, but the charging station load may determine that the voltage on the DC bus is within its droop voltage interval ΔU8. In this case, the energy storage device maintains its power, and the charging station load increases its charging power. If the power in the DC microgrid remains in excess and the voltage on the DC bus continues to increase, the energy storage device may determine that the voltage on the DC bus is now within its droop voltage interval ΔU1, and the energy storage device may increase its own charging power. If the power in the DC microgrid further remains in excess and the voltage on the DC bus continues to increase, but the energy storage device has already reached its charging power upper limit, the power of the photovoltaic device may be limited.

By applying the power-voltage curves shown in FIG. 3A to FIG. 3C to the energy storage devices in a DC microgrid, a load tracking could be achieved, thereby optimizing the economic efficiency of the DC microgrid.

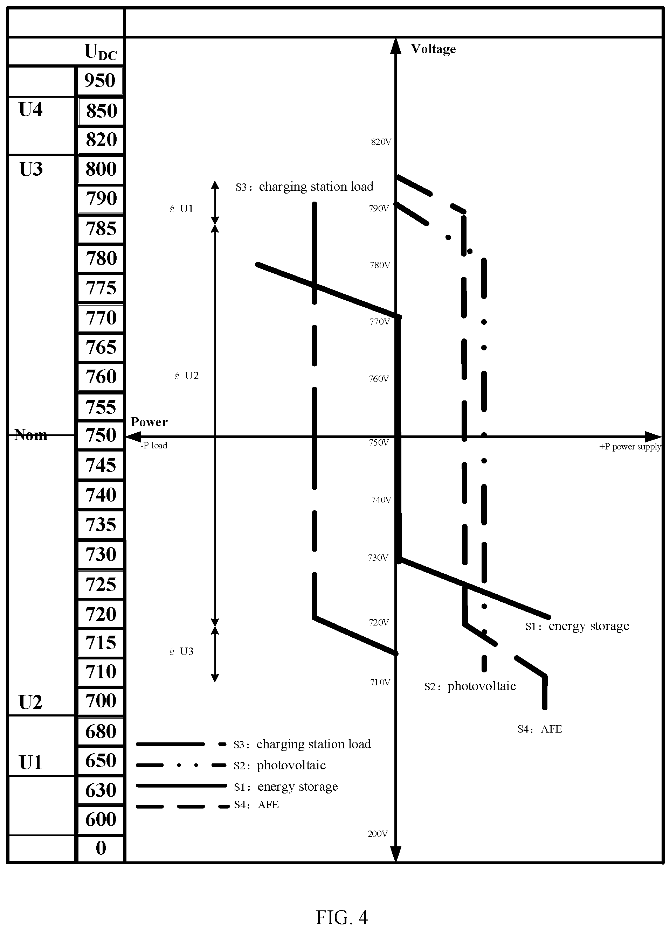

FIGURE 4 illustrates power-voltage curves of various devices in a DC microgrid in which a constant power droop is applied to an Active Front-End (AFE) device according to an embodiment of the present disclosure.

As shown in FIG. 4, the energy storage device may have a power-voltage curve S1, the photovoltaic device may have a power-voltage curve S2, the charging station load may have a power-voltage curve S3, and the AFE device may have a power-voltage curve S4. As can be seen from FIG. 4, only the AFE device is configured with the constant power droop. However, the present disclosure is not limited to this, and any power-adjustable device in the DC microgrid may be configured with constant power droop.

In some embodiments, to achieve a constant power at a point of common coupling (PCC), it is generally necessary for the AFE device to maintain the constant power as much as possible, even if the AFE device has the highest constant power priority. Therefore, a constant power voltage interval of the AFE device is required to be set as wide as possible. For example, when the plurality of devices in the DC microgrid are configured with the constant power droop, the constant power voltage interval of the AFE device would be configured to be the widest among those of all devices.

Referring to FIG. 4, the AFE device is configured with a constant power voltage interval ΔU2. In some embodiments, consider a steady-state where the current voltage on the DC bus is 750 V. It can be seen that the power of the AFE device may remain constant within the constant power voltage interval ΔU2, regardless of the power surplus in the DC microgrid and increasing of the voltage on the DC bus, or the power deficit in the DC microgrid and decreasing of the voltage on the DC bus. Furthermore, since the constant power voltage interval ΔU2 is set to be the maximum, the power of the AFE device may be adjusted only when all other devices in the DC microgrid have adjusted their own power and voltage but still cannot bring the DC microgrid to a balanced state.

By applying the power-voltage curve shown in FIG. 4 to the AFE device in the DC microgrid, the constant power to the public grid (PCC) in the DC microgrid could be achieved, thereby optimizing the economic efficiency of the DC microgrid.

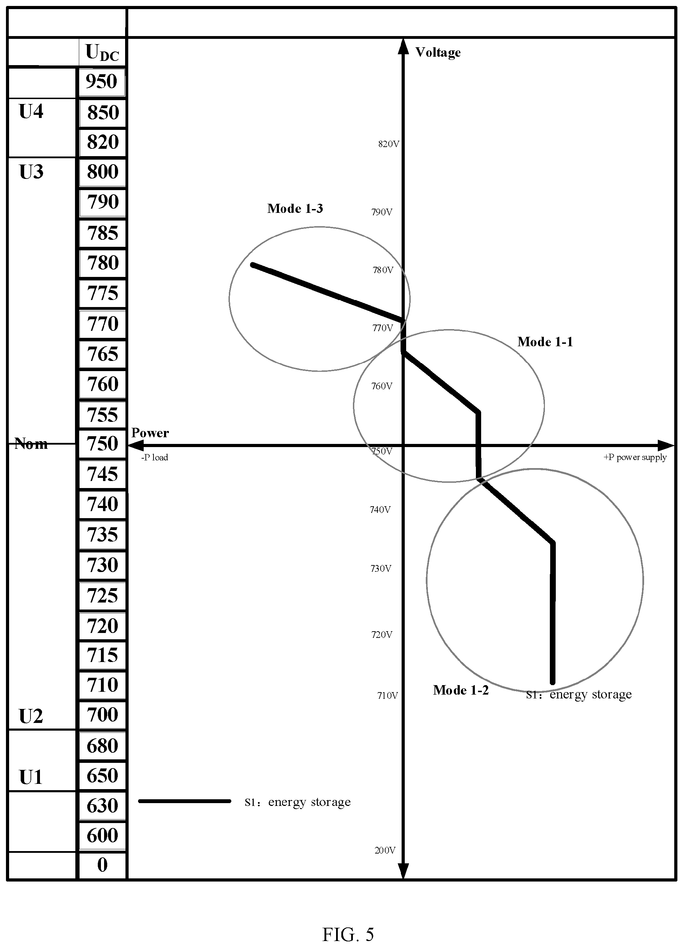

FIG. 5 illustrates a schematic diagram of a constant power droop implemented by an energy storage device according to embodiments of the present disclosure .

Referring to FIG. 5, which shows a schematic diagram illustrating switching between the constant power mode and the droop mode when an energy storage device configured with the constant power droop discharges. However, the present disclosure is not limited to this, and similar mode switching may be applied to cases where the energy storage device is charged, in standby, and any other device configured with the constant power droop.

As shown in FIG. 5, the power-voltage curve for the discharging of the energy storage device includes a Mode 1-1, a Mode 1-2, and a Mode 1-3. In some embodiments, the microgrid controller configures the power-voltage curve for the energy storage device (i.e., configures the constant power voltage interval, the droop voltage interval, and the specific power). The energy storage device initially operates in Mode 1-1. When the DC microgrid operates normally (with the bus voltage of 750 V), the energy storage device operates at full power in Mode 1-1 (i.e., the bus voltage is within the constant power voltage interval of the energy storage device, and the energy storage device maintains the specific power to be unchanged). If the system has excess power, the AFE device is unloaded, and the system voltage increases, then the energy storage device enters a droop segment of Mode 1-1, i.e., it actively reduces its discharging power to maintain the power in the system to be balanced. If the DC microgrid still has excess power after the discharging power of the energy storage device drops to zero, causing the voltage on the DC bus to continue to increase, the energy storage device actively switches its operating mode to Mode 1-3 based on the voltage on the DC bus, i.e., the energy storage device begins to be charged. In some embodiments, if the energy storage device is operating at the full power in Mode 1-1 (i.e., the bus voltage is within the constant power voltage interval of the energy storage device, and the energy storage device maintains the specific power to be unchanged), and the system experiences the power deficit, the AFE device is at full load, and the voltage in the system drops, the energy storage device actively switches its operating mode to Mode 1-2 based on the voltage on the DC bus.

In some embodiments, the devices in the DC microgrid may first stabilize their own power, and then stabilize their own voltage based on the power-voltage curve. For example, the devices may adjust their own voltage in a stepwise manner to avoid sudden voltage changes.

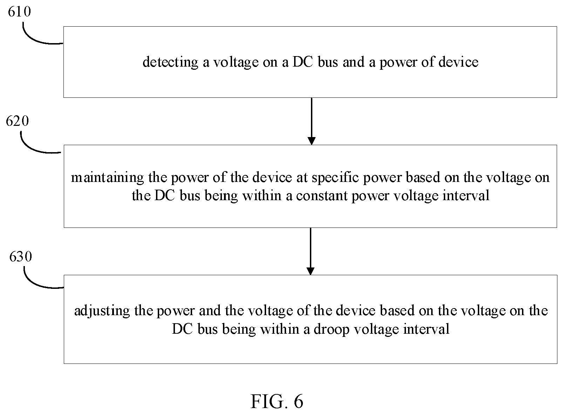

FIG. 6 illustrates a power control method for a DC microgrid according to embodiments of the present disclosure. The DC microgrid may include a DC bus and multiple devices connected to the DC bus, at least one of the multiple devices may perform the method shown in FIG. 6.

As shown in FIG. 6, in step S610, at least one of the multiple devices may detect the voltage on the DC bus and the power of that device. When there is a power deficit or a power surplus in the DC microgrid, the voltage on the DC bus may fluctuate, the devices connected to the DC bus may detect changes in the DC microgrid's power by monitoring the voltage on the DC bus.

In step S620, based on the voltage on the DC bus being within a constant power voltage interval, at least one device may maintain its power at a specific power. In some embodiments, at least one device among the multiple devices may be configured with a constant power voltage interval, and the at least one device may maintain to be the specific power when the voltage on the DC bus is within the constant power voltage interval. The specific power may be configured as a non-zero power. For example, for an energy storage device that is charging, the specific power may be configured as being less than zero, and for an energy storage device that is discharging, the specific power may be configured as being greater than zero.

In step S630, based on the voltage on the DC bus being within the droop voltage interval, at least one device may adjust its power and voltage. In some embodiments, at least one of the multiple devices may be configured with the droop voltage interval, and the at least one device may adjust its power and voltage when the voltage on the DC bus is within the droop voltage interval. For example, after at least one device is configured with the constant power voltage interval, the droop voltage interval, and the specific power, a power-voltage curve may be determined based on its own power upper limit and power lower limit, and the device may adjust its own power and voltage based on that power-voltage curve.

One of ordinary skill in the art may realize that the units and algorithmic steps of the embodiments described in connection with the embodiments disclosed in the present invention are capable of being realized in the electronic hardware, the computer software, or a combination of both, and that the composition and steps of the embodiments have been described in the foregoing description in general terms according to the functions, in order to clearly illustrate the interchangeability of hardware and software. Whether these functions are performed in hardware or software depends on the specific application and design constraints of the technical solution. The skilled person may use different methods for each specific application to implement the described functions, but such implementation should not be considered beyond the scope of the present invention.

It is clear to those skilled in the field to which it belongs that, for the convenience and brevity of the description, the specific working processes of the above-described systems, apparatuses and units may be referred to the corresponding processes in the foregoing embodiments of the methods, which will not be repeated herein.

In the several embodiments provided in the present invention, it should be understood that the disclosed systems, apparatuses and methods, may be realized in other ways. For example, the above-described embodiments of the device are merely example, e.g., the division of the units described, is merely a logical functional division, and the actual implementation may be divided in other ways, e.g., a plurality of units or components may be combined or may be integrated into another system, or some of the features may be ignored, or not implemented. Another point is that the mutual coupling or direct coupling or communication connection shown or discussed may be an indirect coupling or communication connection through some interface, device or unit, which may be electrical, mechanical or otherwise.

The units illustrated as separated components may or may not be physically separated, and components displayed as units may or may not be physical units, and may either be located in one place or may be distributed over a plurality of network units. Some or all of these units may be selected to fulfill the purpose of this embodiment scheme according to actual needs.

Furthermore, the functional units in the various embodiments of the present invention may be integrated in a single processing unit, or each unit may be physically present separately, or two or more units may be integrated in a single unit. The integrated unit may be realized either in the form of hardware or in the form of a software functional unit.

The integrated units may be stored in a computer-readable storage medium if realized in the form of a software functional unit and sold or used as a separate product. Based on this understanding, the technical solution of the present invention, in essence or as a contribution to the prior art, or all or part of the technical solution, may be embodied in the form of a software product, which is stored in a storage medium comprising a number of instructions to enable a computer device (which may be a personal computer, a server, or a network device, etc.) to carry out all or part of the steps of the method described in various embodiments of the invention, and the computer software product is stored in a storage medium comprising instructions to cause a computer device (which may be a personal computer, a server, a network device, etc.) to perform all or part of the steps of the method described in the various embodiments of the invention. The aforementioned storage medium includes a USB flash drive, a removable hard disk, a read-only memory (ROM, Read-Only Memory), a random access memory (RAM, Random Access Memory), a diskette or a CD-ROM, and other media that may store program code.

The foregoing are only specific embodiments of the present invention, but the scope of protection of the present invention is not limited thereto, and any person skilled in the art who is familiar with the technical field can easily think of changes or substitutions within the scope of the technology disclosed by the present invention, which should be covered by the scope of protection of the present invention. Therefore, the scope of protection of the present invention shall be stated to be subject to the scope of protection of the claims.

Further aspects of the invention are provided by the subject matter of the following clauses:
Clause 1. A Direct Current (DC) microgrid, the DC microgrid comprising: a DC bus; and a plurality of devices connected to the DC bus, wherein at least one of the plurality of devices is configured to: detect a voltage on the DC bus and a power of the device; maintain the power of the device at a specific power based on the voltage on the DC bus being within a constant power voltage interval; and adjust the power and the voltage of the device based on the voltage on the DC bus being within a droop voltage interval, wherein the specific power is non- zero.
Clause 2. The DC microgrid of Clause 1, wherein the constant power voltage interval and the droop voltage interval are preconfigured.
Clause 3. The DC microgrid of Clause 1 or Clause 2, wherein the DC microgrid further comprises a microgrid controller, and wherein the specific power is received by the device from the microgrid controller.
Clause 4. The DC microgrid of any of Clauses 1 to 3, wherein the specific power is within an adjustable power range of the device.
Clause 5. The DC microgrid of any of Clauses 1 to 4, wherein the plurality of devices comprises an Active Front-End (AFE) device, and wherein the AFE device has a largest constant power voltage interval.
Clause 6. The DC microgrid of Clause 5, wherein when the voltage on the DC bus changes, the AFE device is the last to adjust its power among the plurality of devices.
Clause 7. The DC microgrid of any of Clauses 1 to 6, wherein adjusting the power and the voltage of the device based on the voltage on the DC bus being within a droop voltage interval comprises: determining a target power and a target voltage of the device based on a current power and a current voltage of the device, and a power-voltage relationship; and adjusting the power and the voltage of the device to the target power and target voltage.
Clause 8. The DC microgrid of Clause 7, wherein the power-voltage relationship is a linear function, and wherein a slope of the linear function is determined based on the constant power voltage interval, the droop voltage interval, and the specific power.
Clause 9. A power control method for a Direct Current (DC) microgrid, wherein the DC microgrid comprises a DC bus and a plurality of devices connected to the DC bus, and for at least one of the plurality of devices, the method comprises: detecting a voltage on the DC bus and a power of the device; maintaining the power of the device at a specific power based on the voltage on the DC bus being within a constant power voltage interval; and adjusting the power and a voltage of the device based on the voltage on the DC bus being within a droop voltage interval, wherein the specific power is non-zero.
Clause 10. The method of Clause 9, wherein the constant power voltage interval and the droop voltage interval are preconfigured.
Clause 11. The method of Clause 9 or Clause 10, wherein the DC microgrid further comprises a microgrid controller, and wherein the specific power is received by the device from the microgrid controller.
Clause 12. The method of any of Clauses 9 to 11, wherein the specific power is within an adjustable power range of the device.
Clause 13. The method of any of Clauses 9 to 12, wherein the plurality of devices comprises an Active Front-End (AFE) device, and wherein the AFE device has a largest constant power voltage interval.
Clause 14. The method of Clause 13, wherein when the voltage on the DC bus changes, the AFE device is the last to adjust its power among the plurality of devices.
Clause 15. The method of any of any of Clauses 9 to 14, wherein adjusting the power and a voltage of the device based on the voltage on the DC bus being within a droop voltage interval comprises: determining a target power and a target voltage of the device based on a current power and a current voltage of the device, and a power-voltage relationship; and adjusting the power and the voltage of the device to the target power and target voltage.
Clause 16. The method of Clause 15, wherein the power-voltage relationship is a linear function, and wherein a slope of the linear function is determined based on the constant power voltage interval, the droop voltage interval, and the specific power.
Clause 17. A computer-readable storage medium having computer-executable instructions stored thereon, wherein the instructions, when executed by a processing unit, are configured to implement the method of any of Clauses 9-16.

## Claims

1. A Direct Current, DC, microgrid, the DC microgrid comprising:
a DC bus; and
a plurality of devices connected to the DC bus, wherein at least one of the plurality of devices is configured to:
detect a voltage on the DC bus and a power of the device;
maintain the power of the device at a specific power based on the voltage on the DC bus being within a constant power voltage interval; and
adjust the power and the voltage of the device based on the voltage on the DC bus being within a droop voltage interval,
wherein the specific power is non- zero.

2. The DC microgrid of claim 1, wherein the constant power voltage interval and the droop voltage interval are preconfigured.

3. The DC microgrid of claim 1 or claim 2, wherein the DC microgrid comprises a microgrid controller, and wherein the specific power is received by the device from the microgrid controller.

4. The DC microgrid of any of claims 1 to 3, wherein the specific power is within an adjustable power range of the device.

5. The DC microgrid of any of claims 1 to 4, wherein the plurality of devices comprises an Active Front-End, AFE, device, and wherein the AFE device has a largest constant power voltage interval.

6. The DC microgrid of claim 5, wherein when the voltage on the DC bus changes, the AFE device is the last to adjust its power among the plurality of devices.

7. The DC microgrid of any of claims 1 to 6, wherein adjusting the power and the voltage of the device based on the voltage on the DC bus being within a droop voltage interval comprises:
determining a target power and a target voltage of the device based on a current power and a current voltage of the device, and a power-voltage relationship; and
adjusting the power and the voltage of the device to the target power and target voltage.

8. The DC microgrid of claim 7, wherein the power-voltage relationship is a linear function, and wherein a slope of the linear function is determined based on the constant power voltage interval, the droop voltage interval, and the specific power.

9. A power control method for a Direct Current, DC, microgrid, wherein the DC microgrid comprises a DC bus and a plurality of devices connected to the DC bus, and for at least one of the plurality of devices, the method comprising:
detecting (610) a voltage on the DC bus and a power of the device;
maintaining (620) the power of the device at a specific power based on the voltage on the DC bus being within a constant power voltage interval; and
adjusting (630) the power and a voltage of the device based on the voltage on the DC bus being within a droop voltage interval,
wherein the specific power is non-zero.

10. The method of claim 9, wherein the constant power voltage interval and the droop voltage interval are preconfigured.

11. The method of claim 9 or claim 10, wherein the DC microgrid comprises a microgrid controller, and wherein the specific power is received by the device from the microgrid controller.

12. The method of any of claims 9 to 11, wherein the specific power is within an adjustable power range of the device.

13. The method of any of claims 9 to 12, wherein the plurality of devices comprises an Active Front-End, AFE, device, and wherein the AFE device has a largest constant power voltage interval,
and optionally when the voltage on the DC bus changes, the AFE device is the last to adjust its power among the plurality of devices.

14. The method of any of claims 9 to 13, wherein adjusting the power and a voltage of the device based on the voltage on the DC bus being within a droop voltage interval comprises:
determining a target power and a target voltage of the device based on a current power and a current voltage of the device, and a power-voltage relationship; and
adjusting the power and the voltage of the device to the target power and target voltage,
and optionally the power-voltage relationship is a linear function, and a slope of the linear function is determined based on the constant power voltage interval, the droop voltage interval, and the specific power.

15. A computer program comprising computer-executable instructions, wherein the instructions, when executed by a processing unit, are configured to implement the method of any of claims 9 to 14.
